# EUROPEAN PATENT SPECIFICATION

(11) **EP 3 589 532 B1**
(45) Date of publication and mention of the grant of the patent: **17.02.2021**
(21) Application number: 18710920.2
(22) Date of filing: 02.03.2018
(51) Int. Cl.: B62D 9/02, B60G 21/02, B62K 5/01, B62K 5/027, B62K 5/08, B62K 5/10, B60G 17/016, B62J 45/40, B62K 5/05, B62K 25/00

(54) **SYSTEM AND METHOD OF CONTRASTING THE JUMPING TRIGGERED BY A RESONANCE OSCILLATION IN A MOTOR VEHICLE WITH THREE OR FOUR WHEELS**
ANORDNUNG UND VERFAHREN GEGEN DAS DURCH EINE RESONANZOSZILLATION IN EINEM KRAFTFAHRZEUG MIT DREI ODER VIER RÄDERN AUSGELÖSTES HÜPFEN
ARRANGEMENT ET PROCÉDÉ DE CONTRASTE DU SAUT DÉCLENCHÉ PAR UNE OSCILLATION DE RÉSONANCE DANS UN VÉHICULE À MOTEUR À TROIS OU QUATRE ROUES

(30) Priority: 03.03.2017 IT 201700024189
(43) Date of publication of application: 08.01.2020
(73) Proprietor: PIAGGIO & C. S.p.A., 56025 Pontedera (Pisa) (IT)
(72) Inventor: RAFFAELLI, Andrea, I-56025 Pontedera, Pisa (IT)
(74) Representative: Zanettin, Gianluigi
(86) International application number: PCT/IB2018/051348
(87) International publication number: WO 2018/158743

(56) References cited:
- EP-A1- 3 069 976
- US-A1- 2009 091 093
- US-A1- 2014 361 502

## Description

### Field of application

The present invention relates to a method of contrasting the jumping triggered by a resonance oscillation in a motor vehicle with three or four wheels.

In particular, the method according to the invention may be implemented in a motor vehicle provided with two steering and rolling wheels at the front and a rear drive wheel with fixed axle at the rear.

### Prior art

In a rolling motor vehicle, the term "jumping" means an alternating oscillation movement of the front rolling wheels, triggered by a resonance of the rolling mechanism which ensures the rolling of the two front wheels.

Generally, this resonance of the rolling mechanism is triggered and/or fed by the road profile, for example by a hole, a braking, and is also influenced by the angles of the wheel with respect to the ground, and therefore by rolling and steering.

In this situation, rolling vehicles that do not have adequate damping on the roll can develop an alternating jumping of the two front rolling wheels during which the shock absorbers do not work and therefore do not help to dampen the event.

The onset of this phenomenon - if not properly countered or controlled - can be extremely dangerous, especially if it occurs at high speeds. In these cases, an uncontrolled jumping can in fact cause the loss of control of the motor vehicle, in extreme cases even resulting in the breaking of the frame, with potentially very serious consequences on the driver's safety.

Motor vehicles with front rolling wheels having a high rolling inertia are much less prone to jumping. This is the case, for example, with rolling motor vehicles in which the rolling kinematic mechanism (rocker arm) which transfers the load between the wheels consists in an articulated rolling quadrilateral which engages the mass of the vehicle itself. This introduces a delay in the motion of the wheels which interferes with the resonance.

A first possible approach to contrast the onset of jumping phenomena therefore consists in increasing the rolling inertia, thus reducing the risk of triggering the jumping resonances.

A second valid approach if the trigger is due to the braking forces, thus horizontal on the ground, is to ensure that the trajectory of the wheels in spring/rolling is as vertical as possible and thus decoupled from such horizontal stresses: this is achieved by tilting the hinges of the rolling quadrilateral by such a value that the vehicle under braking, by lying on the forecarriage, approaches the parallelism to the ground.

Another approach is to remove the jumping resonance from the normal operating conditions of the vehicle by varying the yaw stiffness of the motor vehicle structure; in this way, the risk of the occurrence of such a phenomenon is reduced. In this technical solution, reinforcement bars are used which connect parts of the frame in order to create a static reinforcement in certain areas to reduce jumping phenomena.

More specifically, in the vehicle reference system, a yaw is defined as a rotation about a vertical axis with respect to the ground. Therefore, increasing the yaw stiffness means reducing the deformation (within certain values, elastic or such as to be cancelled when the stress ceases) caused by the moment of a longitudinal force applied to a single wheel (also equivalent to loads of different entities applied to both wheels). The jumping is related to the yaw deformation because the wheel in the deformation of its support finds the least contrast to move in the direction of the suspension, thus generating an equal force on the opposite wheel because the rocker arm is devoid of damping; therefore, the stiffening does not cancel the jumping once occurred but prevents it by shifting up its frequency related to the yaw deformation.

Approaches related to interventions on the damper hydraulics are also possible, but they are too complex to implement and generally not very effective. The jumping is in fact due to oscillations of the rolling mechanism, which the shock absorbers are not able to significantly influence. In fact, once the jumping has been triggered, the wheel moves together with the entire suspension of that side upstream of the rolling quadrilateral. Therefore, changing the characteristics of the shock absorbers does not affect the phenomenon. Also in this case, the jumping is an oscillation of the quadrilateral which "sees" at the opposite masses consisting of the wheel and suspension assembly which move rigidly. The shock absorbers during the oscillation do not change in length, they do not vary their response in terms of force and therefore any modification to their spring and hydraulics features is useless.

US 2014/361502 A1 discloses a straddle-type vehicle including left and right front wheels effectively preventing deterioration of a travel feeling caused by vibrations occurring in the left and right front wheels. The straddle-type vehicle includes a body frame, left and right front wheels, a link mechanism configured to connect the left and right front wheels with the body frame, a shock absorber configured to damp vibrations in the same phase occurring in the left and right front wheels, and a damper configured to damp vibrations in opposite phases occurring in the left and right front wheels. The damper is configured such that its damping force increases at least in a certain frequency range as the frequency of the vibrations in the opposite phases increases.

In general, to date, all the anti-jumping approaches adopted in rolling motor vehicles are aimed at avoiding the resonance of the rolling kinematic mechanism and the consequent jumping phenomenon.

In the case (however remote) of onset of the jumping resonance, it is not in fact possible to prevent it from turning into a dangerous alternating jumping of the wheels. In that case, the (difficult) control of the motor vehicle is in fact left to the driver's ability.

In the field of rolling motor vehicles, there is therefore the need to identify and implement strategies to counteract the jumping of a rolling motor vehicle, which can be automatically adopted by a motor vehicle control system or possibly by the driver's decision after the roll resonance has been triggered to dampen the oscillations of the rolling kinematic mechanism, preventing them from turning into a dangerous alternating jumping of the front wheels.

### Disclosure of the invention

Therefore, the object of the present invention is to eliminate or at least reduce the above drawbacks of the prior art by providing a method of contrasting the jumping triggered by a resonance oscillation in a three or four-wheeled rolling motor vehicle which, in the event of onset of a resonance of the rolling kinematic mechanism and consequent triggering of an alternating jumping of the front wheels, allows to dampen such a jumping phenomenon before it assumes an intensity such as to cause the loss of control of the motor vehicle.

A further object of the present invention is to provide a method of contrasting the jumping triggered by a resonance oscillation in a motor vehicle with three or four wheels which is operatively reliable and easy to implement.

### Description of the figures

The technical features of the invention can clearly be seen in the content of the claims below, and its advantages will become more readily apparent in the detailed description that follows, made with reference to the accompanying drawings, which illustrate one or more embodiments thereof which are purely exemplary and non-limiting, in which:

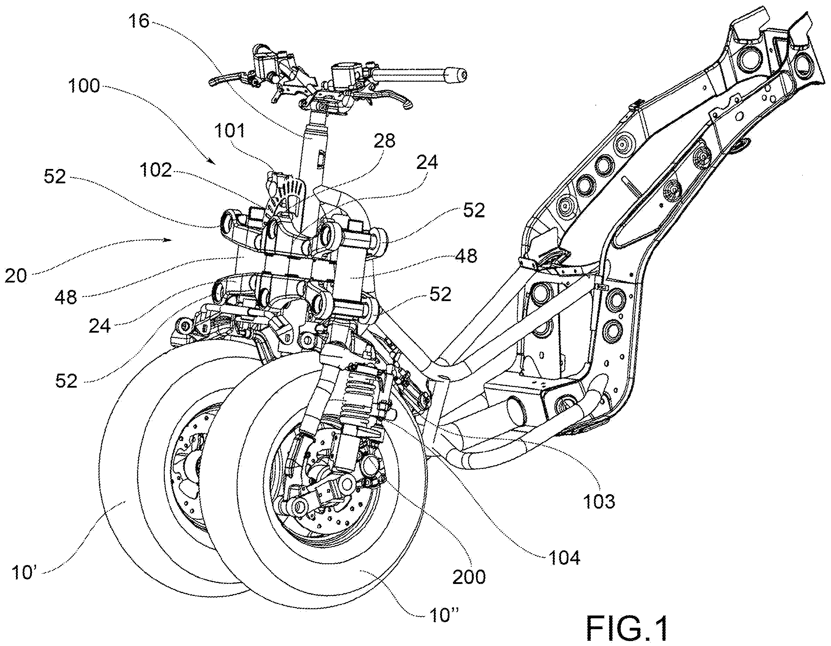

- figure 1 shows a front view of an example of a rolling motor vehicle in which the method of contrasting the jumping according to the invention can be implemented, such a motor vehicle being provided with a roll block system which operates directly on the rolling kinematic mechanism; and

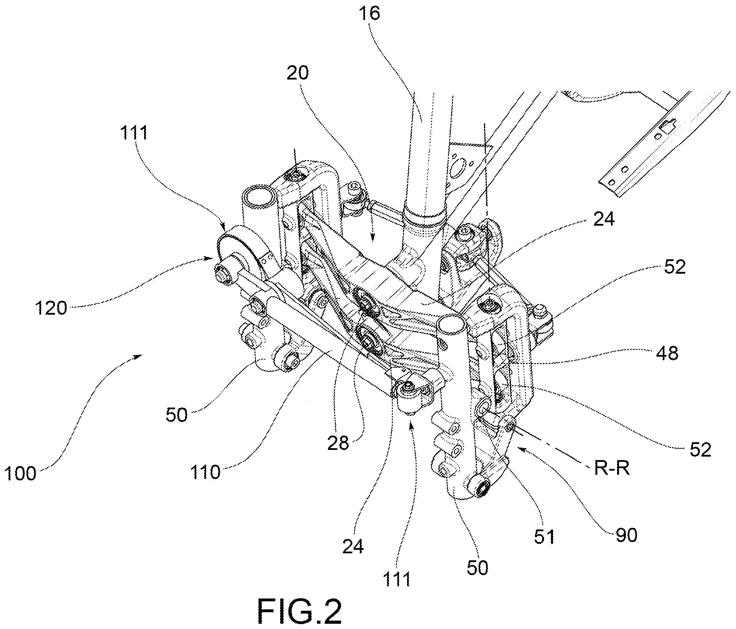

- figures 2, 3 and 4 show three perspective views of the forecarriage of three examples of rolling motor vehicles in which the method of contrasting the jumping according to the invention can be implemented, such motor vehicles being provided with three different roll block systems, having in common the fact that they operate indirectly on the rolling kinematic mechanism by acting on the axle journals of the two front rolling wheels.

### Detailed description

The present invention relates to a method of contrasting the jumping triggered by a resonance oscillation in a motor vehicle with three or four wheels.

For the purposes of the present invention, it should be noted that the term motor vehicle should be considered in a broad sense, encompassing any motor vehicle having at least three wheels, i.e. two front wheels and at least one rear wheel. Therefore, the definition of motor vehicle also encompasses the so-called quads, with two wheels at the forecarriage and two wheels at the rear.

In particular, the method according to the invention may be implemented in a motor vehicle provided with two steering and rolling wheels at the front and a rear drive wheel with fixed axle at the rear.

As illustrated in the accompanying figures, the method according to the invention is implemented in a rolling motor vehicle comprising:
- a forecarriage frame 16;
- at least a pair of front wheels 10', 10' kinematically connected to each other and to the forecarriage frame 16 by means of a rolling kinematic mechanism 20; and
- a roll block system 100 adapted to block the rolling of the two front wheels 10', 10".

The roll block system 100 acts directly or indirectly on the rolling kinematic mechanism 20.

The rolling kinematic mechanism 20 may have any configuration provided that it is functional to ensure the front wheels to roll in a synchronous manner.

In particular, such a rolling kinematic mechanism may be a system configured as an articulated quadrilateral system. Alternatively, the rolling kinematic mechanism may be, for example, a suspended longitudinal arm system.

In particular, the rolling motor vehicles illustrated in the accompanying figures are all provided with a rolling kinematic mechanism consisting of an articulated quadrilateral system.

More in detail, as illustrated in the examples in figures 1 to 4, such an articulated quadrilateral system comprises a pair of cross members 24 hinged to the forecarriage frame 16 at middle hinges 28. The cross members 24 are connected to each other, at opposite transverse ends 40, 44 by means of uprights 48 pivoted at said transverse ends at side hinges 52. The cross members 24 and the uprights 48 define the above articulated quadrilateral 20. The suspensions and the wheel bearing axle journals are mechanically associated with the uprights of the articulated quadrilateral rolling kinematic mechanism.

The rolling motor vehicle shown in Figure 1 is described in particular in the European patent EP1561612B1. The rolling motor vehicle is provided with a rolling kinematic mechanism 20 with an articulated quadrilateral structure and two independent front suspensions 200. The roll block system 100 comprises a mechanical clamp 101 which acts on a sector of a brake disc 102 fixed to a cross member 24 of the articulated quadrilateral. The mechanical clamp 101 can be operated in engagement on disc sectors 102 to block the movements of the articulated quadrilateral and thus prevent the roll allowed thereby. The roll block system 110 also comprises two hydraulic clamps 103 which are simultaneously operated by an electric motor and act on rods 104 placed in parallel with the shock absorbers 200 so as to prevent roll due to an asymmetrical suspension of the two wheels. In this case, the roll block system 100 acts directly on the rolling kinematic mechanism.

The rolling motor vehicles illustrated in Figures 2, 3 and 4 are described in particular respectively in the Italian patent application no. IT 102015000088087, in the Italian application no. 102015000088090 and in the Italian application no. 102015000088097.

More in detail, each of these three motor vehicles is equipped with a rolling kinematic mechanism with an articulated quadrilateral structure. Unlike the motor vehicle shown in Figure 1, the roll block system 100 of the motor vehicles shown in Figures 2, 3 and 4 does not act directly on the rolling kinematic mechanism 20, but indirectly on an element which is added to the rolling structure of the motor vehicle and is specifically intended for the purpose. More in detail, such an additional element consists of a direct interconnection element between the axle journals 50 of two rolling wheels, mechanically released from the frame of the motor vehicle. "Axle journal" of a wheel is the mechanical part of the motor vehicle intended to support the rotation pin of the wheel itself and interconnected it kinematically to the suspensions, the steering device and, in the specific case, to the kinematic roll mechanism. The axle journal can be kinematically integral with the wheel pin 51, which in turn supports the wheel through bearings. In that case, the axle journal may be made integral with the wheel pin or be mechanically constrained thereto to form one piece. As an alternative, the axle journal can be kinematically integral with the wheel pin, which in turn supports the wheel through bearings.

Such a roll block system - as kinematically released from the effects induced by the suspensions - allows blocking all the roll movements by acting only on such an additional element, thus including the roll movements generated by an asymmetrical spring movement of two rolling wheels.

More in detail, in the rolling motor vehicle shown in Figure 2 and described in Italian patent application no. 102015000088087, the roll block system 100 consists of an extendable rod 110 which connects directly at the two ends thereof the two front wheel axle journals to each other by means of hinge means 111 equivalent to a spherical joint. The roll blocking is achieved by blocking the angle of rotation of the extendable rod 110 on the rolling plane at at least one end thereof by means of a dedicated actuator, such as a band brake or a drum brake 120 (as shown in Figure 2). The rod 110 so locked prevents the rolling movements of the two wheels. The roll block system may comprise two actuators, one at each of the two ends of the extendable rod 110. "Rolling plane" means a plane transverse to the longitudinal direction or direction of travel of the motor vehicle, and thus incident the centre line plane of the motor vehicle.

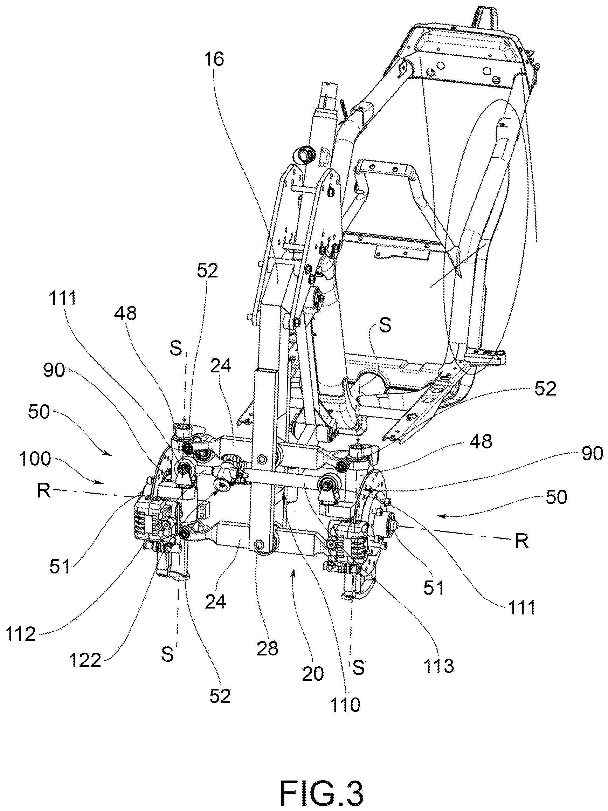

An alternative roll block system with respect to the particular one illustrated in Figure 2, but again described in Italian patent application no. 102015000088087, provides that the axle journals 50 of the two front wheels are connected to each other not by a single rod, but by two extendable rods so as to form an articulated quadrilateral system which is additional to the one forming the rolling kinematic mechanism. Blocking the roll is achieved by blocking the configuration of such an additional articulated quadrilateral (and therefore indirectly the rotation of each of the two rods with respect to the axle journals) by means of a mechanical clamp which is associated with one of the two extendable rods and acts on a brake disc sector fixed to the other extendable rod. The mechanical clamp can be operated in engagement on the disc sector to block the relative movements of the two extendable rods. Also in the rolling motor vehicle shown in Figure 3 and described in Italian patent application no. 102015000088090, the roll block system 100 consists of an extendable rod 110 which connects directly at the two ends thereof the two front wheel axle journals 50 - at the respective steering axes S-S - to each other by means of hinge means 111 equivalent to a spherical joint. In this case, the rolling block is achieved by blocking the length of the extendable rod 110 by means of a brake calliper 122 acting on the two telescopically associated portions 112 and 113 of the rod 110 itself.

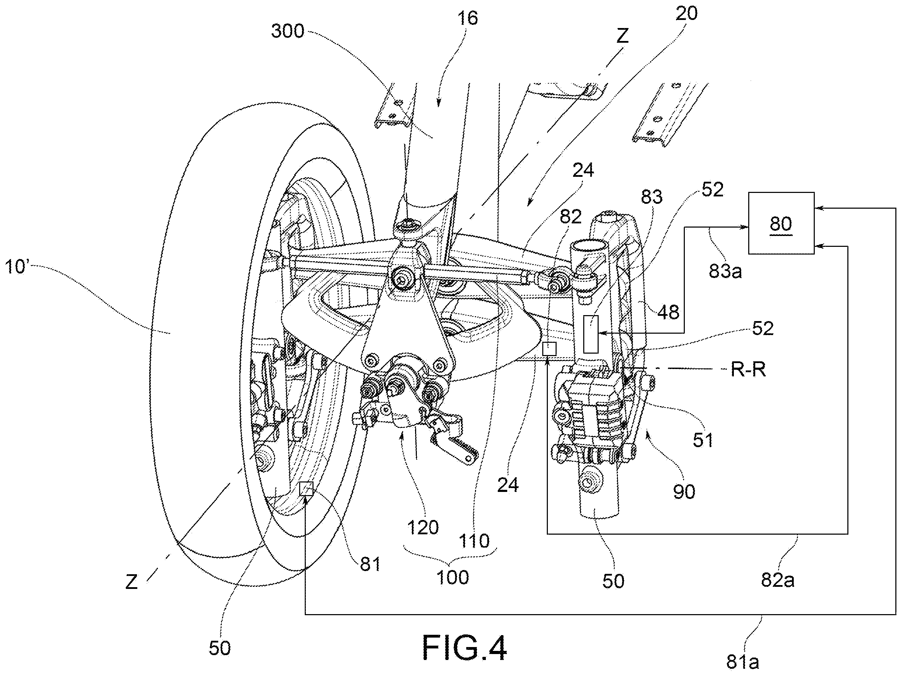

In the rolling motor vehicle shown in Figure 4 and described in Italian patent application no. 102015000088097, the roll block system 100 consists of a rod 110 which connects directly at the two ends thereof the two front wheel axle journals 50 - at the respective steering axes - to each other by means of hinge means equivalent to a spherical joint. In this case, the rod 110 is not an additional element dedicated solely to the rolling block, but consists of the horizontal steering bar of the steering system. The steering bar is in turn hinged to a steering column 300 at an intermediate point between its two ends so as to oscillate with respect to the steering column 300 about a rotation axis Z-Z substantially orthogonal to a rolling plane of the two front wheels. The roll block is achieved by blocking the rotation of the steering bar 110 by a dedicated actuator, for example, a band brake, a drum brake or a disc brake 120, as shown in Figure 4.

In the solutions illustrated in Figures 2 and 4, the suspensions 90 are associated externally with the rolling kinematic mechanism 20, while in the solution illustrated in Figure 3 the suspensions 90 are integrated into the uprights 48 of the articulated quadrilateral forming the rolling kinematic mechanism 20.

The roll block systems described above are only exemplary. In general, the roll block system 100 of the two front wheels 10', 10", which operates directly or indirectly on the above rolling kinematic mechanism 20, can have any configuration as long as it is functional to the rolling block.

According to the present invention, the method of contrasting the jumping triggered by a resonance oscillation in a motor vehicle with three or four wheels comprises the following operating steps:
- a) detecting a resonance oscillation which is triggered while driving the motor vehicle and generates an alternate jumping of the rolling kinematic mechanism 20, wherein said step a) of detecting generates selectively: an active resonance signal related to the presence of resonance oscillations of rolling kinematic mechanism 20; and a passive resonance signal related to the non-presence of resonance oscillations of rolling kinematic mechanism 20;
- b) actuating the roll block system 100 (during the movement of the motor vehicle) in presence of said active resonance signal;
- b') keeping said roll block system 100 neutral in presence of said passive resonance signal. The step of actuating the roll block system (100) is suitable to damp the resonance oscillations resulting in a progressive damping of the alternate jumping of the rolling kinematic mechanism 20 and thus of the front wheels 10', 10", until annulling said oscillations.

Advantageously, the detection of a resonance oscillation can be carried out within predetermined frequency intervals, since the resonance oscillations of the rolling kinematic mechanism 20 have a specific own motion and therefore specific frequencies.

Advantageously, it is provided for a step of generating an active resonance signal following said detection step a), wherein in the presence of said active resonance signal said actuating step b) is activated.

By active resonance signal it is meant a signal that detects the presence of the resonance phenomenon on the rolling kinematic mechanism or on the front wheels.

Therefore, the step of actuating the roll block device is carried out in feedback in the presence of such an active resonance signal. The specification of how the signal is filtered is described in detail hereafter.

Preferably, said actuating step b) is prolonged for the entire period of time during which said active resonance signal detected in the detection step a) persists, so that the detection step a) and the actuating step b) are repeated as long as the active resonance signal persists in order to achieve a complete damping of the resonance oscillation of the rolling kinematic mechanism 20. When the resonance oscillation has been damped, the detection step provides a monitoring step as described in detail below.

Advantageously, the actuation step is performed intermittently, and is preferably prolonged for as long as the detection of such resonance oscillation persists.

Operationally, the intermittent blocking of rolling by means of the above block system stops the oscillations of the rolling kinematic mechanism 20 generated by the resonance oscillation with a consequent progressive damping of the alternating jumping of the front wheels 10', 10" caused by such oscillations.

The intermittent operation of the roll block system allows not to overload the driving of the motor vehicle, and thus not to worsen the driving feeling.

In particular, the intermittent actuation of the block system 100 only causes a slowing of the rolling movements, so as to interfere as little as possible with the driving action of the motor vehicle itself.

Due to the present invention, unlike what is contemplated in the prior art, it is therefore possible to intervene after the onset of a resonance of the rolling kinematic mechanism and consequent triggering of an alternating jumping of the front wheels, thus dampening such a jumping phenomenon before it assumes an intensity such as to cause the loss of control of the motor vehicle.

As shown schematically in Figure 4, the step a) of detecting is obtained by at least one sensor 81, 82 arranged on the rolling kinematic mechanism 20 and/or on the front wheels 10', 10".

Preferably, the above step a) comprises a step c) of monitoring the vibratory phenomena of the front wheels 10', 10" and/or of the rolling kinematic mechanism 20, and possibly also on the suspensions 90, in order to monitor the onset and the development over time of the above resonance oscillation of the rolling kinematic mechanism 20 during the movement of the motor vehicle.

Operatively, the sampling frequency of the monitoring action must be such as to ensure statistically an intervention of the roll block system in the initial triggering steps of any resonance oscillations.

Preferably, the above step c) of monitoring is carried out continuously during the movement of the motor vehicle. In this way it is possible to more easily ensure that the detection of a possible resonance oscillation occurs temporally as close as possible to the moment of the onset of such phenomenon and it is therefore possible to brake the oscillations of the rolling kinematic mechanism 20 (generated by the above resonance oscillation) when they still have a limited amplitude with an alternating jumping of the wheels still small and therefore still controllable by the driver. Moreover, the damping of these oscillations will be more effective and faster.

In particular, "continuous" monitoring means a monitoring conducted with a time sampling frequency of signal acquisition (detection) at least twice the frequency of the resonance oscillation, which has a typical frequency of about 10Hz.

According to a preferred embodiment of the method according to the invention, the above step c) of monitoring comprises at least one of the following sub-steps:
- c1) measuring the oscillations on the front wheels 10', 10" by means of sensors 81 associated to the front wheels 10', 10"; and
- c2) measuring the oscillations on the rolling kinematic mechanism 20 by means of sensors 82 associated with the rolling kinematic mechanism (20).

In particular, the monitoring step c) can comprise both sub-steps c1) and c2).

The above sensors 81, 82 are suitable to generate corresponding response signals 81a and 82a.

The above step c) also comprises a sub-step d) of processing the signals generated by the above sensors 81 and/or 82 applying a predefined filtering logic in order to distinguish between vibratory phenomena correlated with resonance oscillations of the rolling kinematic mechanism and vibratory phenomena not related to resonance oscillations of the rolling kinematic mechanism.

In particular, wherein the above step d) of processing the above response signals 81a, 82a applies a predefined filtering logic to distinguish between the above active resonance signal related to the presence of resonance oscillations of the rolling kinematic mechanism 20 and a passive resonance signal related to the absence of resonance oscillations of the rolling kinematic mechanism 20.

Preferably, the sub-steps c1) and c2) of measuring the oscillations are conducted with a time sampling frequency of signal acquisition at least greater than 20 Hz, and preferably from 50 and 100 Hz, and even more preferably greater than 100 Hz.

The fact that the system has the ability to distinguish between vibratory phenomena correlated with resonance oscillations of the rolling kinematic mechanism and vibratory phenomena not correlated to resonance oscillations of the rolling kinematic mechanism is not essential for contrasting the jumping, but is wholly preferable for the efficiency of the system as a whole. Without this capacity, the system would also intervene in situations of resonance of the forecarriage triggered by normal operation, due for example to the fact that the motor vehicle is traveling on a stretch of uneven road.

Advantageously, the sensors 81, 82 associated to the front wheels 10', 10" and/or to the rolling kinematic mechanism 20 comprise at least one sensor chosen from:
- an accelerometer;
- an angular potentiometer placed between the rolling kinematic mechanism 20 and the frame 16 to check the roll and associated with linear and/or angular displacement sensors; and
- a combination thereof.

Preferably, the sensors 81 associated to the front wheels 10', 10" comprise at least one accelerometer for each front wheel.

In particular, it is possible to provide an embodiment in which an accelerometer and an angular potentiometer are associated to each front wheel 10', 10". The angular potentiometer is placed between the rolling kinematic mechanism 20 and the frame 16 to check the roll and is associated with linear and/or angular displacement sensors.

According to a completely preferred embodiment of the method according to the invention, the monitoring step c) comprises a sub-step c3) of measuring the oscillations of the suspensions 90 of the two front wheels by means of sensors 83 associated with the suspensions 90. This sub-step c3) is implemented in combination with at least one of the sub-steps c1)-c2).

Preferably, the sensors 83 associated with the suspensions 90 comprise a position sensor.

As already discussed, generally the vibratory phenomena correlated to resonance oscillations of the rolling kinematic mechanism (and therefore potentially capable of triggering dangerous jumping phenomena) are never accompanied by compression of the suspensions.

Preferably, in the steps c1)-c2) of processing of the signals generated by the sensors 81, 82 associated with the front wheels 10', 10" and/or with the rolling kinematic mechanism 20, a filter logic based on the behaviour of the suspensions in concomitance with resonance oscillations of the rolling kinematic mechanism may be adopted.

In more detail, as a filtering logic, a logic can be adopted that classifies those vibratory phenomena coupled with suspension compression as not related to resonance oscillations of the rolling kinematic mechanism.

Preferably, said processing sub-step d) is conducted by acquiring the signals generated in at least one of the sub-steps c1)-c2) and the signals generated by the detection sensors 83 of the oscillations of the suspensions in the sub-step c3) and implementing said filtering logic.

The above predefined filtering logic classifies as non-correlated to resonance oscillations of the rolling kinematic mechanism those vibratory phenomena coupled to suspension compression.

Therefore, sub-step c3) per se is not able to detect the resonance oscillation, because the suspensions do not work when it occurs.

The sub-step c3) serves, on the other hand, correlated to the signals of the detection steps on the wheels and/or the rolling kinematic mechanism, to distinguish the presence or absence of the resonance phenomenon.

Preferably, the roll block system 100 of the two front wheels 10', 10" which operates directly or indirectly by blocking the rolling kinematic mechanism 20 comprises devices adapted to exert a continuous and non-discrete blocking action of the rolling kinematic mechanism 20.

In particular, devices capable of exerting a continuous and non-discrete blocking action are, in general, blocking devices which operate by friction, in particular disc brakes, drum brakes or tape brakes.

On the contrary, devices capable of exerting a discrete blocking action are all the blocking devices based on the shape coupling, in particular ratchet or gear systems. Such devices are less effective in contrasting resonance oscillation phenomena, since in order to function effectively they require that the two parts to be mutually blocked are not substantially subject to relative movements, but are essentially stationary. This does not occur if a wheel enters in resonance. In this case, for the weights and damping involved there is a frequency of an order of magnitude greater than 10 HZ and the components of the roll block system would be subject to fast relative movements. This would in fact prevent or at least make the intervention of the ratchet or gear locking systems difficult.

Preferably, the step b) of intermittently actuating the roll block system 100 is carried out according to a predefined scheme of intervention based on a modulation of the blocking frequency.

Advantageously, the predefined intervention scheme may be based on a modulation of the frequency and intensity of blocking.

Operatively, as already mentioned, the actuation of the roll block system 100 in step b) is modulated in frequency, and possibly also in intensity, so as not to lead to a complete blockage of the roll while driving the motor vehicle. The intermittent actuation of the blocking system 100 in fact has an effect only of slowing down the roll movements in order to maintain substantially unchanged the driving dynamics of the motor vehicle itself.

Advantageously, depending on the type of roll block system 100, different operating strategies can be adopted in the modulation of the blocking frequency, and possibly also of the blocking intensity.

For example, in the case where the block system consists of a disc sector plus clamp (as in the case illustrated in the motor vehicle example illustrated in Figure 4) and the clamp is mechanically operated (for example by means of a metal cable), the clamp can be controlled at successive instants, for example, with a pwm (pulse width modulation) control in such a way that the succession of blocks still allows the rolling of the vehicle. A prolonged block of the rolling would in fact lead to a loss of control of the trajectory imposed by the driver. This control strategy can also be adopted in other block systems, for example consisting of tape or drum brakes, mechanically operated by means of metal cables.

If the block system is operated hydraulically, the damping can be introduced by partializing the oil passages without reaching a complete system block.

Preferably, as illustrated schematically in Figure 4, the method of contrasting the jumping according to the present invention is implemented in a completely automatic way by an electronic control unit 80 of the motor vehicle.

In particular, both step a) of detection and step b) of actuation of the roll block system 100 are implemented and performed automatically by program means loaded on said electronic control unit 80 for controlling the motor vehicle.

In particular, step c) of monitoring the vibratory phenomena of the front wheels and/or the rolling kinematic mechanism is automatically implemented, with the relative sub-steps:
- c1) measuring the oscillations on the front wheels 10', 10" by means of sensors 81 associated to the front wheels 10', 10";
- c2) measuring the oscillations on the rolling kinematic mechanism 20 by means of sensors 82 associated with the rolling kinematic mechanism (20); and
- d) processing the signals generated by the above sensors 81 applying a predefined filtering logic in order to distinguish between vibratory phenomena correlated with resonance oscillations of the rolling kinematic mechanism and vibratory phenomena not related to resonance oscillations of the rolling kinematic mechanism.
- c3) continuously measuring the oscillations of the suspensions of the two front wheels by means of sensors associated with the suspensions,
or a combination of steps c1) - c3).

In detail, the sub-step c3) of providing sensors on the suspensions must be integrated with one of the two sub-steps.

According to an alternative and not preferred embodiment of the method according to the invention, only the detection step a), and in particular the step c) of monitoring the vibratory phenomena of the front wheels and/or of the rolling kinematic mechanism (with the relative sub-steps c1), c2) and c3) and)), is carried out automatically by the electronic control unit 80 of the motor vehicle, while the step b) of intermittent actuation of the roll block system 100 is assigned to the intervention of the driver as a response to the generation of the active resonance signal which detects the occurrence of a resonance oscillation by the electronic control unit 80. In this case, - in a first configuration - the active resonance signal will activate a special sound and/or light signalling device (for example, a warning light on the dashboard) and by a manual command to activate the roll block system 100, the driver can control the execution of an intermittent actuation, for example a button. Preferably, the actuation of the roll block system in the intermittent version is in any case managed automatically by the electronic control unit 80 of the motor vehicle, which will define the frequency and/or the intensity of the roll block.

Compared to a manual actuation by the driver (for example, following the activation of a sound and/or light alarm on the dashboard that signals the triggering of a dangerous resonance oscillation of the rolling kinematic mechanism, or on the evaluation of the driver himself), a fully automatic drive ensures faster and safer operation. The method according to the invention provides, in fact, that the operation of the roll block system takes place during the vehicle travel, possibly even at high speeds, and with specific times and modes. An automatic control of the times and of the operating modes is therefore completely preferable to ensure not only an effective intervention efficiency, but also the safety of the driver. Advantageously, the automatic actuation of the roll block system for anti-jumping purposes can however be signalled to the driver by means of a light and/or sound signal (for example, a warning light on the dashboard) similar to the ABS or ASR systems to indicate the management of a potential danger.

From what has been said above, the method of contrasting the jumping according to the invention is based on the introduction of a damping on the mechanism which ensures the rolling of the motor vehicle in order not so much to avoid the onset of resonance, but to damp it as soon as triggered, before it turns into a dangerous alternating jumping of the wheels. The intervention strategy can be applied in general on any rolling motor vehicle provided with a roll block system and therefore does not depend on the rolling kinematic mechanism or the roll block system.

In particular, as already described above, the method according to the invention can be applied to a three or four-wheeled rolling motor vehicle in which the rolling kinematic mechanism 20 consists of an articulated quadrilateral system.

The roll block system 100 of the two front wheels 10', 10" can operate directly on the rolling kinematic mechanism 2 (as in the motor vehicle illustrated in Figure 1). In this case, the roll block system 100 comprises releasable means for blocking the configuration of the articulated quadrilateral system, which in the example of Figure 1 consist of a disc brake 101, 102.

For the purposes of the present invention, in the motor vehicle in Figure 1 the roll block which operates in parallel on the shock absorbers does not affect the jumping and may not be used, since only the mechanical part which acts on the disc brake is sufficient.

More in detail, in the motor vehicle illustrated in Figure 1, the roll block system comprises a stepper electric motor which, by means of a metal cable, actuates the mechanical clamp 101 on the disc sector 102 which blocks the articulated rolling quadrilateral. In parallel, the stepper electric motor also actuates a pump of a hydraulic circuit which actuates the two clamps which block the rods 103 placed in parallel with the shock absorbers 200. The mechanical irreversibility, fundamental to ensure that the block remains active during the long stop without using battery voltage, is given by the low mechanical efficiency of the gears which multiply the torque of the electric motor. Also the electric parking clamps of cars are provided with mechanical irreversibility to ensure that the car can remain braked when parked even with low battery.

As previously described in relation to the implementation of the method of contrasting the jumping according to the invention, in the specific case of the motor vehicle illustrated in Figure 1 it would be sufficient to operate on the disc-brake system 101, 102 which frictionally blocks the quadrilateral. For the purposes of the present invention, however, it is not necessary to inhibit the operation of the parallel block on the shock absorbers, acting on the hydraulic circuit. Such inhibition would not cause problems, but it would be useless, since in the event of an alternating jumping of the wheels (as already highlighted) the shock absorbers do not intervene.

More specifically, for the implementation of the method according to the invention, the motor vehicle illustrated in Figure 1 may be provided with a control unit which directly actuates the stepper motor by modulating the pads on the disc. This can be done by operating at intervals and/or by not tightening the disc completely between the brake linings. The aim is in fact to introduce a damping which, if it cannot be of the viscous type (therefore dependent on the speed obtained in the shock absorbers), can be at least Coulumbian, i.e. friction, or position dependent, as for all types of brake.

According to an alternative and preferred embodiment of the invention, the roll block system 100 of the two front wheels 10', 10" can operate indirectly on the rolling kinematic mechanism 20 (as in the motor vehicles shown in Figures 2, 3 and 4).

In this case, preferably, as provided for in the motor vehicles shown in Figures 2, 3 and 4 and as already described above, the roll block system 100 comprises a second kinematic mechanism 110 which directly connects the two front wheels 10', 10" with each other at the respective axle journals 50 by means of hinging means and is susceptible of assuming at least two different configurations:
- a free configuration, wherein such a second kinematic mechanism 110 follows passively and transparently with respect to the driving dynamics the movements of the two wheels 10', 10" with each other and with respect to the forecarriage frame 16; and
- a blocked configuration, wherein such a second kinematic mechanism 110 blocks the angle formed by a lying plane of at least one wheel with respect to the ground. In particular, such a lying plane is orthogonal to the rotation axis R-R of the wheel itself.

This second mechanism may comprise one or more extendable rods connected at the ends to the axle journals 50 of the two front wheels and releasable means for locking the length of the extendable rods or the angle of rotation of said rods with respect to the front wheel axle journals.

In the case where the roll block system comprises actuators (drum or tape brakes) at both ends of the rods for blocking the rotation of the rods, for the purposes of the present invention, only one of these actuators may be actuated, duplication being a redundant element for the purpose of blocking the rolling.

The axle journal 50 of each wheel is mechanically connected to a rotation pin 51 of the wheel so as to support it rotatably around an axis of rotation R-R. The motor vehicle comprises suspension means 90 to guarantee each axle journal 50 at least one spring suspension movement with respect to the above rolling kinematic mechanism 20.

In particular, as provided in the motor vehicle illustrated in Figure 3, the suspensions 90 can be integrated into the uprights 48 of the articulated quadrilateral forming the rolling kinematic mechanism 20.

For the purpose of implementing the method of contrasting the jumping according to the invention, a roll block system which indirectly operates on the rolling kinematic mechanism by working on the wheel axle journals is preferable, since it allows intervening closer to the source of the jumping. The contrast of the jumping is therefore potentially more rapid and effective.

The present invention concerns also a system for contrasting the jumping triggered by a resonance oscillation in a motor vehicle with three or four wheels.

Said motor vehicle comprising: - a forecarriage frame 16; - at least a pair of front wheels 10', 10" kinematically connected to each other and to the forecarriage frame 16 by means of a rolling kinematic mechanism 20; - a roll block system 100 suitable to block the rolling of the two front wheels 10', 10", wherein said roll block system 100 acts directly or indirectly on said rolling kinematic mechanism 20.

Said system comprising programme means configured for:
- a) detecting a resonance oscillation which is triggered while driving the motor vehicle and generates an alternate jumping of the rolling kinematic mechanism (20), wherein said detection generates selectively: an active resonance signal related to the presence of resonance oscillations of rolling kinematic mechanism 20, and a passive resonance signal related to the non-presence of resonance oscillations of rolling kinematic mechanism 20;
- b) actuating said roll block system 100 in presence of said active resonance signal;
- b') keeping said roll block system 100 neutral in presence of said passive resonance signal.

The actuation of said roll block system 100 is suitable to damp the resonance oscillations resulting in a progressive damping of the alternate jumping of the rolling kinematic mechanism 20 and thus of the front wheels 10', 10", until annulling said oscillations.

The detection of a resonance oscillation is achieved by means of at least one sensor located on said front wheels and/or on said rolling kinematic mechanism.

The invention allows several advantages to be achieved, some of them already described. The method according to the present invention, unlike what is contemplated in the prior art, allows intervening after the onset of a resonance of the rolling kinematic mechanism and consequent triggering of an alternating jumping of the front wheels, thus dampening such a jumping phenomenon before it assumes an intensity such as to cause the loss of control of the motor vehicle.

The method of contrasting the jumping triggered by a resonance oscillation in a three or four-wheeled rolling motor vehicle according to the invention is furthermore operationally reliable and easy to implement, since in the intervention step it is based on roll block devices with which rolling motor vehicles are generally already provided.

The invention thus conceived thus achieves the intended purposes.

Of course, it may take, in its practical embodiment, also shapes and configurations other than the above without departing from the present scope of protection.

Furthermore, all details may be replaced with technically equivalent elements and dimensions, shapes and materials used may be any according to the needs.

## Claims

1. Method of contrasting the jumping triggered by a resonance oscillation in a motor vehicle with three or four wheels, said motor vehicle comprising: - a forecarriage frame (16); - at least a pair of front wheels (10', 10") kinematically connected to each other and to the forecarriage frame (16) by means of a rolling kinematic mechanism (20); - a roll block system (100) suitable to block the rolling of the two front wheels (10', 10"), wherein said roll block system (100) acts directly or indirectly on said rolling kinematic mechanism (20), said method comprising the operating steps of:
- a) detecting a resonance oscillation which is triggered while driving the motor vehicle and generates an alternate jumping of the rolling kinematic mechanism (20), wherein said step a) of detecting generates selectively: an active resonance signal related to the presence of resonance oscillations of rolling kinematic mechanism (20); and a passive resonance signal related to the non-presence of resonance oscillations of rolling kinematic mechanism (20);
- b) actuating said roll block system (100) in presence of said active resonance signal;
- b') keeping said roll block system (100) neutral in presence of said passive resonance signal,
wherein said step of actuating said roll block system (100) is suitable to damp the resonance oscillations resulting in a progressive damping of the alternate jumping of the rolling kinematic mechanism (20) and thus of the front wheels (10', 10"), until annulling said oscillations
and wherein said detection of a resonance oscillation is achieved by means of at least one sensor (81, 82) placed on said front wheels (10', 10") and/or on said rolling kinematic mechanism (20).

2. Method according to claim 1, wherein said actuating step b) is a step of actuating intermittently said roll block system (100).

3. Method according to one or more of the previous claims, wherein said actuating step b) is prolonged for the entire period of time during which said active resonance signal detected in said detection step a) persists, so that said detection step a) and said actuating step b) are repeated in a loop as long as said active resonance signal persists in order to achieve a complete damping of the resonance oscillation of said rolling kinematic mechanism (20).

4. Method according to one or more of the preceding claims, wherein said detection step a) comprises a step c) of monitoring the oscillations of the front wheels (10', 10") and/or of the rolling kinematic mechanism (20),
preferably wherein the monitoring step c) comprises at least one of the following sub-steps:
- c1) measuring the oscillations on the front wheels (10', 10") by means of sensors (81) associated to the front wheels (10', 10"), and
- c2) measuring the oscillations on the rolling kinematic mechanism (20) by means of sensors (82) associated with the rolling kinematic mechanism (20)
wherein said sensors (81, 82) are suitable to generate corresponding response signals (81a, 82a)
and wherein said monitoring step c) comprises a sub-step d) of processing said response signals (81a, 82a) generated by said sensors (81, 82) applying a predefined filtering logic to distinguish between said active resonance signal related to the presence of resonance oscillations of the rolling kinematic mechanism (20) and a passive resonance signal related to the absence of resonance oscillations of the rolling kinematic mechanism (20).

5. Method according to claim 4, wherein said sensors (81,82) associated to the front wheels (10', 10") and/or to the rolling kinematic mechanism (20) comprise at least one sensor chosen from: an accelerometer; an angular potentiometer placed between the rolling kinematic mechanism (20) and frame (16) to check the roll and associated with linear and/or angular displacement sensors; and a combination thereof
and wherein preferably said sensors (81) associated to the front wheels (10', 10") comprise at least one accelerometer for each front wheel (10', 10").

6. Method according to one or more of the claims from 4 to 5, where the sub-steps c1) and c2) of measuring the oscillations are conducted with a time frequency of signal acquisition at least greater than 20 Hz, and preferably from 50 and 100 Hz, and even more preferably greater than 100 Hz.

7. Method according to one or more of the claims from 4 to 6, wherein said monitoring step c) comprises a step c3) of measuring the oscillations on the suspensions by means of sensors (83) associated to the suspensions (90) which is actuated in combination with at least one of the sub-steps c1)-c2),
wherein preferably said sensors (83) associated to said suspensions comprise a position sensor,
and wherein more preferably said processing sub-step d) is conducted by acquiring the signals generated in at least one of the sub-steps c1)-c2) and the signals generated by the detection sensors (83) of the oscillations of the suspensions in the sub-step c3), said predefined filtering logic classifying as unrelated to resonance oscillations of the rolling kinematic mechanism those vibratory phenomena coupled to suspension compression (90).

8. Method according to one or more of the preceding claims wherein said roll block system (100) of the two front wheels (10', 10") operating in blocking directly or indirectly said rolling kinematic mechanism (20) comprises devices suitable to exert a continuous and not discreet blocking and/or damping action of the rolling kinematic mechanism (20).

9. Method according to one or more of the preceding claims, wherein said step b) of intermittently actuating said roll block system (100) is carried out according to a predefined scheme of intervention based on a modulation of the blocking frequency, and wherein preferably said predefined intervention scheme is based on a modulation of the frequency and intensity of blocking.

10. Method according to claim 9, wherein the actuation of said roll block system (100) in step b) is modulated in frequency, and possibly also in intensity, so as not to lead to a complete blockage of the roll while driving the motor vehicle, the intermittent actuation of the blocking system (100) having as effect only a slowing down of the roll movements in order to maintain substantially unchanged the driving dynamics of said vehicle.

11. Method according to one or more of the preceding claims, **characterised in that** said detection a) and actuation steps b) are implemented and executed to operate automatically via program means loaded on an electronic control unit (80) of the motor vehicle.

12. Method according to one or more of the preceding claims, wherein said rolling kinematic mechanism (20) consists of an articulated quadrilateral system.

13. Method according to one or more of the preceding claims, wherein said roll block system (100) of the front wheels (10', 10") acts directly on said rolling kinematic mechanism (20).

14. Method according to claim 12 and 13, wherein said roll block system (100) comprises releasable blocking means of the configuration of said articulated quadrilateral system.

15. Method according to one or more of the claims from 1 to 12, wherein said roll block system (100) of the front wheels (10', 10") acts indirectly on said rolling kinematic mechanism (20).

16. Method according to claim 15, wherein each front wheel (10',10") is connected to said rolling kinematic mechanism (20) by a respective axle journal (50), the latter being mechanically connected to a rotation pin (51) of the wheel in order to support it rotatably about an axis of rotation (R-R), said motor vehicle comprising suspension means (90) which guarantee each axle journal (50) at least one springing motion with respect to said rolling kinematic mechanism (20), said roll block system (100) comprising a second kinematic mechanism (110) which directly connects the two front wheels (10', 10") at the respective axle journals (50) by means of hinging means and is suitable to adopt at least two different configurations: - a free configuration, wherein said second kinematic mechanism (110) follows passively and transparently with respect to the driving dynamics the movements of said two wheels (10', 10") with each other and with respect to the frame (16); and - a blocked configuration, wherein said second kinematic mechanism (110) blocks the angle formed by a lying plane of at least one wheel with respect to the ground.

17. System for contrasting the jumping triggered by a resonance oscillation in a motor vehicle with three or four wheels, said motor vehicle comprising: - a forecarriage frame (16); - at least a pair of front wheels (10', 10") kinematically connected to each other and to the forecarriage frame (16) by means of a rolling kinematic mechanism (20); - a roll block system (100) suitable to block the rolling of the two front wheels (10', 10"), wherein said roll block system (100) acts directly or indirectly on said rolling kinematic mechanism (20), said system comprising programme means configured for:
- a) detecting a resonance oscillation which is triggered while driving the motor vehicle and generates an alternate jumping of the rolling kinematic mechanism (20), wherein said detection of a resonance oscillation generates selectively: an active resonance signal related to the presence of resonance oscillations of rolling kinematic mechanism (20), and a passive resonance signal related to the non-presence of resonance oscillations of rolling kinematic mechanism (20);
- b) actuating said roll block system (100) in presence of said active resonance signal;
- b') keeping said roll block system (100) neutral in presence of said passive resonance signal,
wherein said actuation of said roll block system (100) is suitable to damp the resonance oscillations resulting in a progressive damping of the alternate jumping of the rolling kinematic mechanism (20) and thus of the front wheels (10', 10"), until annulling said oscillations
wherein said detection of a resonance oscillation is achieved by means of at least one sensor (81, 82) placed on said front wheels (10', 10") and/or on said rolling kinematic mechanism (20).

## Patentansprüche

1. Verfahren zum Entgegenwirken des Hüpfens, welches durch eine Resonanz-Oszillation in einem Motorfahrzeug mit drei oder vier Rädern ausgelöst wird, wobei das Motorfahrzeug umfasst: - einen Vorderwagen-Rahmen (16); - wenigstens ein Paar von vorderen Rädern (10', 10"), welche kinematisch miteinander und mit dem Vorderwagen-Rahmen (16) mittels eines kinematischen Roll-Mechanismus (20) verbunden sind; - ein Roll-Blockierung-System (100), welches dazu geeignet ist, das Rollen der beiden vorderen Räder (10', 10") zu blockieren, wobei das Roll-Blockierung-System (100) direkt oder indirekt auf den kinematischen Roll-Mechanismus (20) einwirkt, wobei das Verfahren die Betriebsschritte umfasst:
- a) Detektieren einer Resonanz-Oszillation, welche während eines Antreibens des Motorfahrzeugs ausgelöst wird und ein alternierendes Hüpfen des kinematischen Roll-Mechanismus (20) erzeugt, wobei der Schritt a) eines Detektierens selektiv erzeugt: ein aktives Resonanz-Signal, welches der Anwesenheit von Resonanz-Oszillationen eines kinematischen Roll-Mechanismus (20) zugeordnet ist; und ein passives Resonanz-Signal, welches der Nicht-Anwesenheit von Resonanz-Oszillationen eines kinematischen Roll-Mechanismus (20) zugeordnet ist;
- b) Betätigen des Roll-Blockierung-Systems (100) in Anwesenheit des aktiven Resonanz-Signal;
- b') Halten des Roll-Blockierung-Systems (100) in Anwesenheit des passiven Resonanz-Signals neutral,
wobei der Schritt eines Betätigens des Roll-Blockierung-Systems (100) dazu geeignet ist, die Resonanz-Oszillationen zu dämpfen, welche in einem progressiven Dämpfen des alternierenden Hüpfens des kinematischen Roll-Mechanismus (20) und daher der vorderen Räder (10', 10") resultiert, bis die Oszillationen annulliert werden,
und wobei die Detektion einer Resonanz-Oszillation mittels wenigstens eines Sensors (81, 82) erhalten wird, welcher an den vorderen Rädern (10', 10") und/oder an dem kinematischen Roll-Mechanismus (20) platziert ist.

2. Verfahren nach Anspruch 1, wobei der Betätigung-Schritt b) ein Schritt eines intermittierenden Betätigens des Roll-Blockierung-Systems (100) ist.

3. Verfahren nach einem oder mehreren der vorhergehenden Ansprüche, wobei der Betätigung-Schritt b) für die gesamte Zeitperiode ausgedehnt wird, während welcher das aktive Resonanz-Signal, welches in dem Detektion-Schritt a) detektiert wird, anhält, so dass der Detektion-Schritt a) und der Betätigung-Schritt b) in einer Schleife wiederholt werden, solange das aktive Resonanz-Signal anhält, um eine komplette Dämpfung der Resonanz-Oszillation des kinematischen Roll-Mechanismus (20) zu erhalten.

4. Verfahren nach einem oder mehreren der vorhergehenden Ansprüche, wobei der Detektion-Schritt a) einen Schritt c) eines Überwachens der Oszillationen der vorderen Räder (10', 10") und/oder des kinematischen Roll-Mechanismus (20) umfasst,
wobei vorzugsweise der Überwachung-Schritt c) wenigstens einen der folgenden Unterschritte umfasst:
- c1) Messen der Oszillationen an den vorderen Rädern (10', 10") mittels Sensoren (81), welche den vorderen Rädern (10', 10") zugeordnet sind, und
- c2) Messen der Oszillationen an dem kinematischen Roll-Mechanismus (20) mittels Sensoren (82), welche dem kinematischen Roll-Mechanismus (20) zugeordnet sind,
wobei die Sensoren (81, 82) dazu geeignet sind, entsprechende Reaktion-Signale (81a, 82a) zu erzeugen,
und wobei der Überwachung-Schritt c) einen Unterschritt d) eines Verarbeitens der Reaktion-Signale (81a, 82a), welche durch die Sensoren (81, 82) erzeugt werden, umfasst, wobei eine vordefinierte Filter-Logik angewendet wird, um zwischen dem aktiven Resonanz-Signal, welches sich auf die Anwesenheit von Resonanz-Oszillationen des kinematischen Roll-Mechanismus (20) bezieht, und einem passiven Resonanz-Signal zu unterscheiden, welches sich auf die Abwesenheit von Resonanz-Oszillationen des kinematischen Roll-Mechanismus (20) bezieht.

5. Verfahren nach Anspruch 4, wobei Sensoren (81, 82), welche den vorderen Rädern (10', 10") und/oder dem kinematischen Roll-Mechanismus (20) zugeordnet sind, wenigstens einen Sensor umfassen, welcher ausgewählt ist aus: einer Beschleunigung-Messeinheit; einem Winkel-Potentiometer, welcher zwischen dem kinematischen Roll-Mechanismus (20) und dem Rahmen (16) platziert ist, um das Rollen zu überprüfen, und linearen und/oder WinkelVerlagerung-Sensoren zugeordnet ist; und einer Kombination davon, und wobei vorzugsweise die Sensoren (81), welche den vorderen Rädern (10', 10") zugeordnet sind, wenigstens eine Beschleunigung-Messeinheit für jedes vordere Rad (10', 10") umfassen.

6. Verfahren nach einem oder mehreren der Ansprüche von 4 bis 5, wobei die Unterschritte c1) und c2) eines Messens der Oszillationen mit einer Zeitfrequenz einer Signal-Erfassung wenigstens größer als 20 Hz und vorzugsweise von 50 bis 100 Hz und weiter bevorzugt größer als 100 Hz durchgeführt werden.

7. Verfahren nach einem oder mehreren der Ansprüche von 4 bis 6, wobei der Überwachung-Schritt c) einen Schritt c3) eines Messens der Oszillationen an den Aufhängungen mittels Sensoren (83) umfasst, welche den Aufhängungen (90) zugeordnet sind, welches in Kombination mit wenigstens einem der Unterschritte c1) - c2) betätigt wird,
wobei vorzugsweise die Sensoren (83), welche den Aufhängungen zugeordnet sind, einen Position-Sensor umfassen,
und wobei weiter bevorzugt der Verarbeitung-Unterschritt d) durch Erfassen der Signale, welche in wenigstens einem der Unterschritte c1) - c2) erzeugt werden, und der Signale, welche durch die Detektion-Sensoren (83) der Oszillationen der Aufhängungen in dem Unterschritt c3) erzeugt werden, durchgeführt wird, wobei die vorbestimmte Filter-Logik diese Vibration-Phänomene, welche mit einer Aufhängung-Kompression (90) gekoppelt sind, als zu den Resonanz-Oszillationen des kinematischen Roll-Mechanismus nicht-zugehörig klassifiziert.

8. Verfahren nach einem oder mehreren der vorhergehenden Ansprüche, wobei das Roll-Blockierung-System (100) der beiden vorderen Räder (10', 10"), welches direkt oder indirekt ein Blockieren des kinematischen Roll-Mechanismus (20) betreibt, Vorrichtungen umfasst, welche dazu geeignet sind, ein kontinuierliches und nicht diskretes Blockieren und/oder eine Dämpfungswirkung des kinematischen Roll-Mechanismus (20) ausüben.

9. Verfahren nach einem oder mehreren der vorhergehenden Ansprüche, wobei der Schritt b) eines intermittierenden Betätigens des Roll-Blockierung-Systems (100) gemäß einem vordefinierten Schema einer Intervention auf Grundlage einer Modulation der Blockierung-Frequenz ausgeführt wird, und wobei vorzugsweise das vordefinierte Intervention-Schema auf einer Modulation der Frequenz und einer Intensität eines Blockierens basiert.

10. Verfahren nach Anspruch 9, wobei die Betätigung des Roll-Blockierung-Systems (100) in Schritt b) in einer Frequenz, und möglicherweise auch in einer Intensität, moduliert wird, um nicht zu einer vollständigen Blockierung des Rollens während eines Antreibens des Motorfahrzeugs zu führen, wobei die intermittierenden Betätigung des Blockierung-Systems (100) nur ein Verlangsamen der Roll-Bewegungen als Effekt aufweist, um im Wesentlichen die Antrieb-Dynamiken des Fahrzeugs unverändert beizubehalten.

11. Verfahren nach einem oder mehreren der vorhergehenden Ansprüche, **dadurch gekennzeichnet, dass** die Detektion- a) und Betätigung-Schritte b) implementiert und ausgeführt werden, um über Programmmittel, welche auf eine elektronische Steuereinheit (80) des Motorfahrzeugs geladen sind, automatisch zu arbeiten.

12. Verfahren nach einem oder mehreren der vorhergehenden Ansprüche, wobei der kinematische Roll-Mechanismus (20) aus einem gelenkigen vierseitigen System besteht.

13. Verfahren nach einem oder mehreren der vorhergehenden Ansprüche, wobei das Roll-Blockierung-System (100) der vorderen Räder (10', 10") direkt auf den kinematischen Roll-Mechanismus (20) einwirkt.

14. Verfahren nach Anspruch 12 und 13, wobei das Roll-Blockierung-System (100) lösbare Blockierung-Mittel der Konfiguration des gelenkigen vierseitigen Systems umfasst.

15. Verfahren nach einem oder mehreren der Ansprüche von 1 bis 12, wobei das Roll-Blockierung-System (100) der vorderen Räder (10', 10") indirekt auf den kinematischen Roll-Mechanismus (20) einwirkt.

16. Verfahren nach Anspruch 15, wobei jedes vordere Rad (10', 10") mit dem kinematischen Roll-Mechanismus (20) durch ein entsprechendes Achsgelenk (50) verbunden ist, wobei das letztere mechanisch mit einem Rotation-Stift (51) des Rades verbunden ist, um es rotierbar um eine Rotationsachse (R-R) zu haltern, wobei das Motorfahrzeug Aufhängung-Mittel (90) umfasst, welche jedem Achsgelenk (50) wenigstens eine federnde Bewegung in Bezug auf den kinematischen Roll-Mechanismus (20) gewährleisten, wobei das Roll-Blockierung-System (100) einen zweiten kinematischen Mechanismus (110) umfasst, welcher die beiden vorderen Räder (10', 10") an den jeweiligen Achsgelenken (50) direkt mittels Gelenk-Mitteln verbindet und geeignet ist, wenigstens zwei verschiedene Konfigurationen anzunehmen: - eine freie Konfiguration, wobei der zweite kinematische Mechanismus (110) passiv und transparent in Bezug auf die Fahrdynamiken den Bewegungen der beiden Räder (10', 10") zueinander und in Bezug auf den Rahmen (16) folgt; und - eine blockierte Konfiguration, wobei der zweite kinematische Mechanismus (110) den Winkel blockiert, welcher durch eine liegende Ebene wenigstens eines Rades in Bezug auf den Boden gebildet ist.

17. System zum Entgegenwirken des Hüpfens, welches durch eine Resonanz-Oszillation in einem Motorfahrzeug mit drei oder vier Rädern ausgelöst wird, wobei das Motorfahrzeug umfasst: - einen Vorderwagen-Rahmen (16); - wenigstens ein Paar von vorderen Rädern (10', 10"), welche kinematisch miteinander und mit dem Vorderwagen-Rahmen (16) mittels eines kinematischen Roll-Mechanismus (20) verbunden sind; - ein Roll-Blockierung-System (100), welches dazu geeignet ist, das Rollen der beiden vorderen Räder (10', 10") zu blockieren, wobei das Roll-Blockierung-System (100) direkt oder indirekt auf den kinematischen Roll-Mechanismus (20) einwirkt, wobei das System Programmmittel umfasst, welche eingerichtet sind zum:
- a) Detektieren einer Resonanz-Oszillation, welche während eines Antreibens des Motorfahrzeugs ausgelöst wird und ein alternierendes Hüpfen des kinematischen Roll-Mechanismus (20) erzeugt, wobei das Detektieren einer Resonanz-Oszillation selektiv erzeugt: ein aktives Resonanz-Signal, welches der Anwesenheit von Resonanz-Oszillationen eines kinematischen Roll-Mechanismus (20) zugeordnet ist; und ein passives Resonanz-Signal, welches der Nicht-Anwesenheit von Resonanz-Oszillationen eines kinematischen Roll-Mechanismus (20) zugeordnet ist;
- b) Betätigen des Roll-Blockierung-Systems (100) in Anwesenheit des aktiven Resonanz-Signals;
- b') Halten des Roll-Blockierung-Systems (100) in Anwesenheit des passiven Resonanz-Signals neutral,
wobei das Betätigen des Roll-Blockierung-Systems (100) dazu geeignet ist, die Resonanz-Oszillationen zu dämpfen, welche in einem progressiven Dämpfen des alternierenden Hüpfens des kinematischen Roll-Mechanismus (20) und daher der vorderen Räder (10', 10") resultiert, bis die Oszillationen annulliert sind,
wobei die Detektion einer Resonanz-Oszillation mittels wenigstens eines Sensors (81, 82) erhalten wird, welcher an den vorderen Rädern (10', 10") und/oder an dem kinematischen Roll-Mechanismus (20) platziert ist.

## Revendications

1. Procédé de contraste du saut déclenché par une oscillation de résonance dans un véhicule à moteur à trois ou quatre roues, ledit véhicule à moteur comprenant : - un châssis d'avant-train (16) ; - au moins une paire de roues avant (10', 10") reliées cinématiquement l'une à l'autre et au châssis d'avant-train (16) au moyen d'un mécanisme cinématique de roulis (20) ; - un système de blocage de roulis (100) approprié pour bloquer le roulis des deux roues avant (10', 10"), dans lequel ledit système de blocage de roulis (100) agit directement ou indirectement sur ledit mécanisme cinématique de roulis (20),
ledit procédé comprenant les étapes opératoires suivantes :
- a) la détection d'une oscillation de résonance qui est déclenchée lors de la conduite du véhicule à moteur et génère un saut alterné du mécanisme cinématique de roulis (20), où ladite étape a) de détection génère de manière sélective : un signal de résonance actif associé à la présence d'oscillations de résonance du mécanisme cinématique de roulis (20) ; et un signal de résonance passif associé à la non-présence d'oscillations de résonance du mécanisme cinématique de roulis (20) ;
- b) l'actionnement dudit système de blocage de roulis (100) en présence dudit signal de résonance actif ;
- b') le maintien dudit système de blocage de roulis (100) neutre en présence dudit signal de résonance passif,
dans lequel ladite étape d'actionnement dudit système de blocage de roulis (100) est appropriée pour amortir les oscillations de résonance et donner un amortissement progressif du saut alterné du mécanisme cinématique de roulis (20) et donc des roues avant (10', 10"), jusqu'à annuler lesdites oscillations,
et dans lequel ladite détection d'une oscillation de résonance est réalisée au moyen d'au moins un capteur (81, 82) placé sur lesdites roues avant (10', 10") et/ou sur ledit mécanisme cinématique de roulis (20).

2. Procédé selon la revendication 1, dans lequel ladite étape d'actionnement b) est une étape d'actionnement par intermittence dudit système de blocage de roulis (100).

3. Procédé selon une ou plusieurs des revendications précédentes, dans lequel ladite étape d'actionnement b) est prolongée pendant toute la période de temps pendant laquelle ledit signal de résonance actif détecté dans ladite étape de détection a) persiste, de sorte que ladite étape de détection a) et ladite étape d'actionnement b) sont répétées en boucle tant que ledit signal de résonance actif persiste afin d'obtenir un amortissement complet de l'oscillation de résonance dudit mécanisme cinématique de roulis (20).

4. Procédé selon une ou plusieurs des revendications précédentes, dans lequel ladite étape de détection a) comprend une étape c) de surveillance des oscillations des roues avant (10', 10") et/ou du mécanisme cinématique de roulis (20),
de préférence dans lequel l'étape c) de surveillance comprend au moins l'une des sous-étapes suivantes :
- c1) la mesure des oscillations sur les roues avant (10', 10") au moyen de capteurs (81) associés aux roues avant (10', 10"), et
- c2) la mesure des oscillations sur le mécanisme cinématique de roulis (20) au moyen de capteurs (82) associés au mécanisme cinématique de roulis (20),
dans lequel lesdits capteurs (81, 82) sont appropriés pour générer des signaux de réponse correspondants (81a, 82a),
et dans lequel ladite étape c) de surveillance comprend une sous-étape d) de traitement desdits signaux de réponse (81a, 82a) générés par lesdits capteurs (81, 82) en appliquant une logique de filtrage prédéfinie pour faire la distinction entre ledit signal de résonance actif associé à la présence d'oscillations de résonance du mécanisme cinématique de roulis (20) et un signal de résonance passif associé à l'absence d'oscillations de résonance du mécanisme cinématique de roulis (20).

5. Procédé selon la revendication 4, dans lequel lesdits capteurs (81, 82) associés aux roues avant (10', 10") et/ou au mécanisme cinématique de roulis (20) comprennent au moins un capteur choisi parmi : un accéléromètre ; un potentiomètre angulaire placé entre le mécanisme cinématique de roulis (20) et le châssis (16) pour vérifier le roulis et associé à des capteurs de déplacement linéaire et/ou angulaire ; et une combinaison de ceux-ci
et dans lequel de préférence lesdits capteurs (81) associés aux roues avant (10', 10") comprennent au moins un accéléromètre pour chaque roue avant (10', 10").

6. Procédé selon une ou plusieurs des revendications 4 à 5, dans lequel les sous-étapes c1) et c2) de mesure des oscillations sont menées avec une fréquence temporelle d'acquisition de signal au moins supérieure à 20 Hz, et de préférence de 50 et 100 Hz, et de manière encore plus préférée supérieure à 100 Hz.

7. Procédé selon une ou plusieurs des revendications 4 à 6, dans lequel ladite étape c) de surveillance comprend une étape c3) de mesure des oscillations sur les suspensions au moyen de capteurs (83) associés aux suspensions (90), qui est actionnée en combinaison avec au moins une des sous-étapes c1) à c2),
dans lequel de préférence lesdits capteurs (83) associés auxdites suspensions comprennent un capteur de position,
et dans lequel, de manière plus préférée, ladite sous-étape d) de traitement est menée en acquérant les signaux générés dans au moins l'une des sous-étapes c1) à c2) et les signaux générés par les capteurs de détection (83) des oscillations des suspensions dans la sous-étape c3), ladite logique de filtrage prédéfinie classant comme non associées aux oscillations de résonance du mécanisme cinématique de roulis les phénomènes vibratoires couplés à la compression (90) de la suspension.

8. Procédé selon une ou plusieurs des revendications précédentes, dans lequel ledit système de blocage de roulis (100) des deux roues avant (10', 10") fonctionnant en bloquant directement ou indirectement ledit mécanisme cinématique de roulis (20) comprend des dispositifs appropriés pour exercer une action continue et non discrète de blocage et/ou d'amortissement du mécanisme cinématique de roulis (20).

9. Procédé selon une ou plusieurs des revendications précédentes, dans lequel ladite étape b) d'actionnement par intermittence dudit système de blocage de roulis (100) est réalisée selon un schéma d'intervention prédéfini basé sur une modulation de la fréquence de blocage, et dans lequel de préférence ledit schéma d'intervention prédéfini est basé sur une modulation de la fréquence et de l'intensité du blocage.

10. Procédé selon la revendication 9, dans lequel l'actionnement dudit système de blocage de roulis (100) à l'étape b) est modulé en fréquence, et éventuellement également en intensité, pour ne pas conduire à un blocage complet du roulis lors de la conduite du véhicule à moteur, l'actionnement par intermittence du système de blocage (100) n'ayant pour effet qu'un ralentissement des mouvements de roulis afin de maintenir sensiblement inchangée la dynamique de conduite dudit véhicule.

11. Procédé selon une ou plusieurs des revendications précédentes, **caractérisé en ce que** lesdites étapes de détection a) et d'actionnement b) sont mises en œuvre et exécutées pour fonctionner automatiquement via des moyens de programmation chargés sur une unité de commande électronique (80) du véhicule à moteur.

12. Procédé selon une ou plusieurs des revendications précédentes, dans lequel ledit mécanisme cinématique de roulis (20) consiste en un système quadrilatéral articulé.

13. Procédé selon une ou plusieurs des revendications précédentes, dans lequel ledit système de blocage de roulis (100) des roues avant (10', 10") agit directement sur ledit mécanisme cinématique de roulis (20).

14. Procédé selon les revendications 12 et 13, dans lequel ledit système de blocage de roulis (100) comprend des moyens de blocage libérables de la configuration dudit système quadrilatéral articulé.

15. Procédé selon une ou plusieurs des revendications 1 à 12, dans lequel ledit système de blocage de roulis (100) des roues avant (10', 10") agit indirectement sur ledit mécanisme cinématique de roulis (20).

16. Procédé selon la revendication 15, dans lequel chaque roue avant (10', 10") est reliée audit mécanisme cinématique de roulis (20) par une fusée d'essieu (50) respective, cette dernière étant reliée mécaniquement à une tige de rotation (51) de la roue afin de la soutenir en rotation autour d'un axe de rotation (R-R), ledit véhicule à moteur comprenant des moyens de suspension (90) qui garantissent à chaque fusée d'essieu (50) au moins un mouvement élastique par rapport audit mécanisme cinématique de roulis (20), ledit système de blocage de roulis (100) comprenant un second mécanisme cinématique (110) qui relie directement les deux roues avant (10', 10") aux fusées d'essieu (50) respectives au moyen d'un moyen d'articulation et est approprié pour adopter au moins deux configurations différentes : - une configuration libre, dans laquelle ledit second mécanisme cinématique (110) suit passivement et de manière transparente par rapport à la dynamique de conduite les mouvements desdites deux roues (10', 10") entre elles et par rapport au châssis (16) ; et - une configuration bloquée, dans laquelle ledit second mécanisme cinématique (110) bloque l'angle formé par un plan de couchage d'au moins une roue par rapport au sol.

17. Système de contraste du saut déclenché par une oscillation de résonance dans un véhicule à moteur à trois ou quatre roues, ledit véhicule à moteur comprenant : - un châssis d'avant-train (16) ; - au moins une paire de roues avant (10', 10") reliées cinématiquement l'une à l'autre et au châssis d'avant-train (16) au moyen d'un mécanisme cinématique de roulis (20) ; - un système de blocage de roulis (100) approprié pour bloquer le roulis des deux roues avant (10', 10"), ledit système de blocage de roulis (100) agissant directement ou indirectement sur ledit mécanisme cinématique de roulis (20),
ledit système comprenant un moyen de programme configuré pour :
- a) détecter une oscillation de résonance qui est déclenchée lors de la conduite du véhicule à moteur et génère un saut alterné du mécanisme cinématique de roulis (20), où ladite détection d'une oscillation de résonance génère de manière sélective : un signal de résonance actif associé à la présence d'oscillations de résonance du mécanisme cinématique de roulis (20), et un signal de résonance passif associé à la non-présence d'oscillations de résonance du mécanisme cinématique de roulis (20) ;
- b) actionner ledit système de blocage de roulis (100) en présence dudit signal de résonance actif ;
- b') maintenir ledit système de blocage de roulis (100) neutre en présence dudit signal de résonance passif,
dans lequel ledit actionnement dudit système de blocage de roulis (100) est approprié pour amortir les oscillations de résonance et donner un amortissement progressif du saut alterné du mécanisme cinématique de roulis (20) et donc des roues avant (10', 10"), jusqu'à annuler lesdites oscillations,
dans lequel ladite détection d'une oscillation de résonance est réalisée au moyen d'au moins un capteur (81, 82) placé sur lesdites roues avant (10', 10") et/ou sur ledit mécanisme cinématique de roulis (20).
